**Europäisches Patentamt**

(19) **European Patent Office**

**Office européen des brevets**

(11) Publication number: **0 110 325**
**B1**

## (12) EUROPEAN PATENT SPECIFICATION

(45) Date of publication of patent specification: **17.08.88**

(51) Int. Cl.⁴: **G 05 D 7/06**

(21) Application number: **83111739.5**

(22) Date of filing: **24.11.83**

(54) Flow rate control system.

(30) Priority: **26.11.82 JP 208259/82**

(43) Date of publication of application:
**13.06.84 Bulletin 84/24**

(45) Publication of the grant of the patent:
**17.08.88 Bulletin 88/33**

(84) Designated Contracting States:
**AT CH DE FR GB IT LI NL SE**

(56) References cited:
**DE-B-2 654 326**
**FR-A-2 266 917**
**US-A-2 949 125**
**US-A-3 427 442**
**US-A-3 746 037**
**US-A-3 845 370**
**US-A-4 170 245**

(73) Proprietor: **Fujikin International, Inc.**
**3-4, 2-chome Itachibori**
**Nishi-ku Osaka (JP)**

(72) Inventor: **Sato, Tetsuji**
**6-4, Ajihara-cho Tennoji-ku**
**Osaka (JP)**

(74) Representative: **Paul, Dieter-Alfred, Dipl.-Ing.**
**Fichtestrasse 18**
**D-4040 Neuss 1 (DE)**

Courier Press, Leamington Spa, England.

## Description

The present invention relates to a flow rate control system comprising the following features:

a) a flow rate regulating valve mounted on a pipe for passing therethrough the fluid to be controlled,

b) a pressure sensor for detecting the fluid pressure at the primary side and the secondary side of an orifice provided within the pipe,

c) a temperature sensor for measuring the fluid temperature in the vicinity of the pressure detecting location,

d) means for calculating the flow rate of the fluid based on the primary and secondary pressure and the temperature detected,

e) means for controlling the degree of opening of the flow rate regulating valve in a direction to decrease the deviation of the calculated flow rate from a flow rate setting in accordance with the deviation and polarity thereof.

Such a flow rate control system is disclosed in DE—B—2 654 326. However, this system comprises only a main pipe for passing therethrough the fluid to be controlled. Therefore, the quantity of the transported fluid is limited by the sectional area of the main pipe. It is not possible to control larger quantities of the fluid.

The object of the present invention is to assure accurate flow rate control also for fluids which are transported in large quantities.

For solving this object, the present invention provides a flow rate control system comprising the following features:

f) a bypass pipe attached to the main pipe and interconnecting the upstream side and the downstream side of the pressure sensor,

g) a bypass valve for opening or closing the flow channel of the bypass pipe,

h) means for controlling opening or closing of the bypass valve,

i) calculating means for correcting the calculated flow rate according to the ratio of the cross sectional areas of the orifice and the opening of the bypass valve, when it is open.

Because the main pipe is provided with a bypass pipe for passing the fluid also therethrough, the system is usable also for transporting a large quantity of fluid even if the main pipe has the orifice. Moreover, the flow of fluid through the bypass pipe is controllable by opening or closing the bypass valve on the bypass pipe. When the bypass valve is open, the calculated flow rate is corrected according to the ratio of the cross sectional areas of the orifice and the opening of the bypass valve. So the flow rate can be controlled accurately even when the fluid is passed through the bypass pipe.

Other features of the present invention contained in the subclaims will become apparent from the following description of an embodiment with reference to the drawings.

Figure 1 is a block diagram showing an embodiment of the invention;

Figure 2 is a diagram showing part of a memory; and

Figure 3 is a flow chart of the flow rate control process to be executed by a CPU.

The present embodiment includes a flow rate sensor in which an orifice is used. Stated strictly, the flow rate W (by weight) is given by the following equation.

$$W = \frac{CvFo}{\sqrt{1 - Cc^2\beta^4 \left(\dfrac{P2}{P1}\right)^{2/X}}} \cdot \sqrt{\frac{2gX}{X-1}P1\gamma \left\{\left(\dfrac{P2}{P1}\right)^{2/X} - \left(\dfrac{P2}{P1}\right)^{(X+1)/X}\right\}} \tag{1}$$

where
P1: primary pressure
P2: secondary pressure
F: cross-sectional area of the channel
Fo: cross-sectional area of the constricted portion (orifice)
$\beta$: area ratio of the constricted portion (Fo/F)
g: acceleration of gravity (9.8 m/sec²)
Cv: coefficient of velocity
Cc: coefficient of contraction
$X$: specific heat ratio of the fluid
$\gamma$: density of the fluid.

The equation (1) is applied to compressible fluids such as gases and based on the assumption that the variations in density and pressure when the fluid passes through the orifice are adiabatic.

The cross-sectional areas F and Fo, the area ratio $\beta$, g and the coefficients Cv and Cc are constants and are stored in a memory in advance as will be described below.

The specific heat ratio $X$ varies with the kind of gas and also with the temperature. Accordingly specific heat ratios $X$ of various gases are predetermined by experiments at varying temperatures T, and the memory has stored therein such values as a specific heat ratio data table.

The density $\gamma$ is calculated from the following equation.

$$\gamma = \gamma o \frac{P1}{Po} \cdot \frac{To}{T} \cdot \frac{1}{K} \tag{2}$$

where
Po: pressure in standard state
To: absolute temperature in standard state
$\gamma$o: density in standard state
K: compressibility factor
The constants Po, To, $\gamma$o and K are predetermined and stored in the memory in advance. The density $\gamma$ is calculated from the equation (2) with use of the measurements of pressure P1 and temperature T. When the fluid is relatively low in pressure and fulfills the requirements of an ideal gas, the compressibility factor K can be regarded as 1. If K is not 1, the compressibility factor measured as an experimental value must be stored in the memory in advance.

It will be understood from above that the flow rate W can be calculated by measuring the primary and secondary pressures P1 and P2 and absolute temperature T.

Although the equation (1) does not apply to a liquid, the flow rate of the liquid can be expressed also as a function of the primary and secondary pressures and temperature. In the case of the liquid, the viscosity appears as a parameter instead of the specific heat ratio, and the viscosity becomes a function of the temperature.

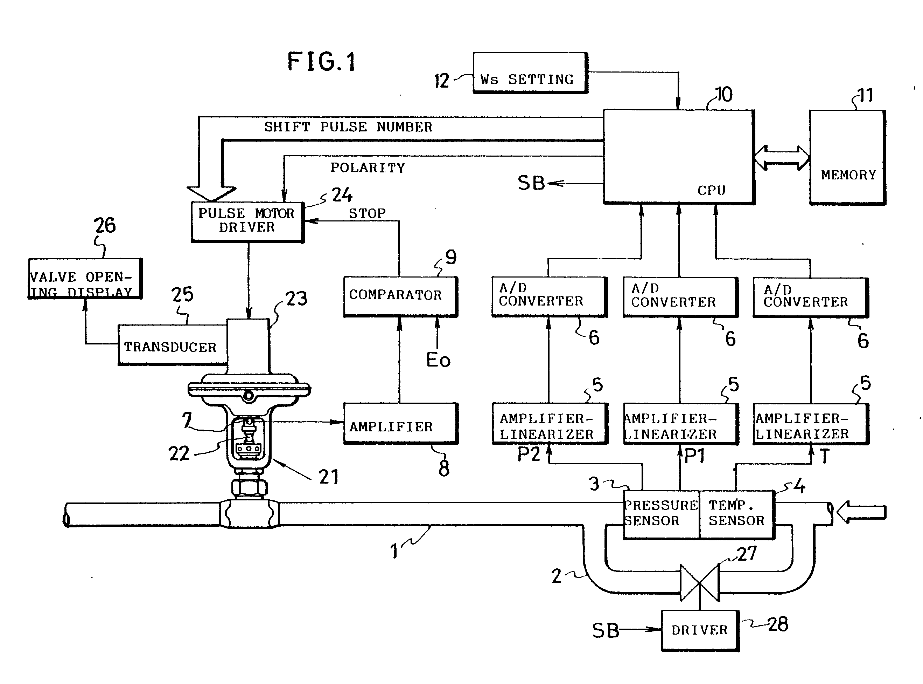

Fig. 1 shows the construction of a flow rate control system. A flow rate regulating valve 21 is mounted on a main pipe 1 for passing a gas therethrough. A pressure sensor 3 and a temperature sensor 4 are mounted on the main pipe 1 upstream from the valve 21. The pressure sensor 3 is adapted to detect pressure P1 and pressure P2 at the primary side and secondary side, respectively, of an orifice plate (not shown) provided within the main pipe 1. The temperature sensor 4, which is adapted to detect the temperature T of the gas flowing through the main pipe 1 comprises, for example, a thermocouple. The signals representing the pressures P1 and P2 and temperature T detected by these sensors 3, 4 are fed to a central processing unit (CPU) 10 via amplifier-linearizer circuits 5 and A/D converter circuits 6. The CPU 10 is, for example, a microprocessor.

The main pipe 1 is provided with a bypass pipe 2 branching off the main pipe 1 upstream from the sensors 3 and 4 and joining the main pipe 1 downstream therefrom. A bypass valve 27 mounted on the bypass pipe 2 is opened or closed by a driver 28. At the portion of the main pipe 1 provided with the pressure sensor 3, there is the orifice plate, which therefore limits the flow rate of the gas passing through this portion. When the gas flows at a high rate, the bypass valve 27 is opened, permitting the gas to partly flow through the bypass 2. The ratio of the fluid dividedly flowing from the main pipe 1 into the bypass 2 is defined by the cross-sectional areas of the orifice of the plate in the main pipe 1 and the fully opened opening of the bypass valve 17, etc. and is approximately constant irrespective of the flow rate. The ratio of the rate of flow w through the bypass pipe 2 plus the rate of the remaining flow W (passing through the main pipe 1 without bypassing) to the rate of the remaining flow W (i.e. the number of times ((W+w)/W) is defined as a bypass correction factor t. When the bypass valve 27 is open, the overall flow rate of the gas actually flowing is the flow rate W calculated from the equation (1) with use of the detected pressures P1 and P2 and the detected temperature T and multiplied by the correction factor t. The correction factor t is predetermined by experiments. When the correction factor t varies slightly with the flow rate, temperature, etc., a table thereof may be prepared in advance.

The flow rate Ws of the fluid to be passed through the main pipe 1 (i.e., flow rate setting) is set on a device 12. The CPU 10 controls the degree of opening of the regulating valve 21 so that the flow rate measurement will be in match with the flow rate setting Ws. The regulating valve 21 can be any of needle valve, disk valve, sleeve valve, ball valve, etc. and is selected in accordance with the kind of gas to be controlled, diameter of the main pipe 1, etc. With the present embodiment, the member (e.g., valve stem) 22 cooperative with the valve seat (not shown) for closing the flow channel through the valve 21 is displaced by a pulse motor 23, which in turn is driven by a driver 24. The CPU 10 gives a shift pulse number and polarity to the driver 24. The shift pulse number represents the angle of rotation of the pulse motor 23, i.e., the displacement of the closing member 22, while the polarity represents the direction of rotation of the pulse motor 23, i.e., the direction of displacement of the closing member 22.

The rotation of the pulse motor 23 is converted to a linear displacement of the closing member 22 by suitable screw-thread means or the like. When the closing member 22 comes into contact with the valve seat, the opening degree of the regulating valve is zero, that is, the valve is closed. If the driver 24 is continuously given the closing instruction even thereafter, the pulse motor 23 continues to rotate in the closing direction. Damage will then result, such as thermal damage to the pulse motor or biting engagement of the closing member with the valve seat. To avoid the incidence of such damage, there is provided a pressure sensor 7 for detecting the contact pressure of the closing member 22 on the valve seat. For example, the pressure sensor 7 is a strain gauge and is attached to a required portion of the closing member 22 or a member connected thereto for detecting the compressive force applied by the screw-thread means and the valve seat. The pressure detected is fed to a comparator circuit 9 via an amplifier circuit 8. The comparator circuit 9 has set therein or is given a reference value Eo, which affords the upper limit of the contact pressure between the closing member 22 and the valve seat. When the detected pressure reaches the reference value Eo, the comparator circuit 9 feeds a forced stop signal to the driver 24, which deenergizes the pulse motor 23.

The number of revolutions of the pulse motor 23 is detected by a rotation transducer 25. Accordingly the output of the transducer 25 represents the position of the closing member 22 and is shown on a display 26 as the degree of valve opening.

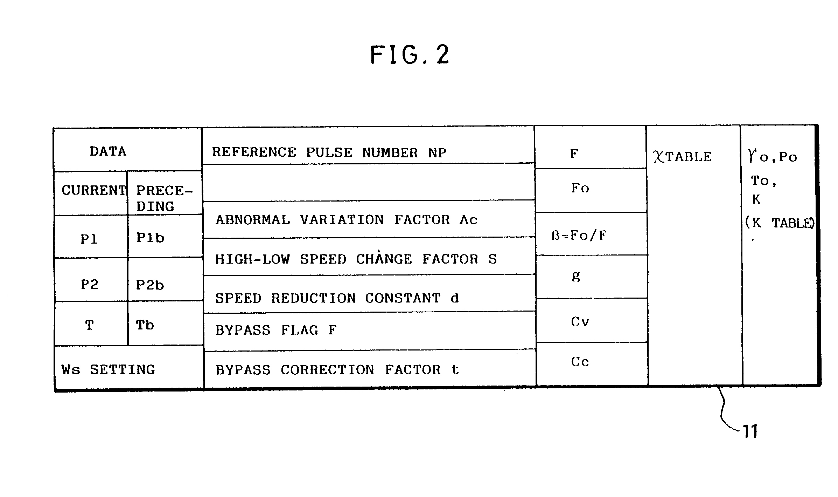

The CPU has a memory (not shown) for storing the memory therefor and a memory 11 for storing various items of data. As seen in Fig. 2, the memory 11 has an area for storing the current measurements and preceding measurements of the pressures P1, P2 and temperature T, an area for storing the flow rate setting Ws fetched from the setting device 12, an area for storing the reference pulse number Np, abnormal variation factor Ac, high-low speed change factor S, speed reduction constant d, bypass flag F (the meanings of these will be described later) and bypass correction factor t, and an area for storing the constants and parameters required for calculating the foregoing equations (1) and (2).

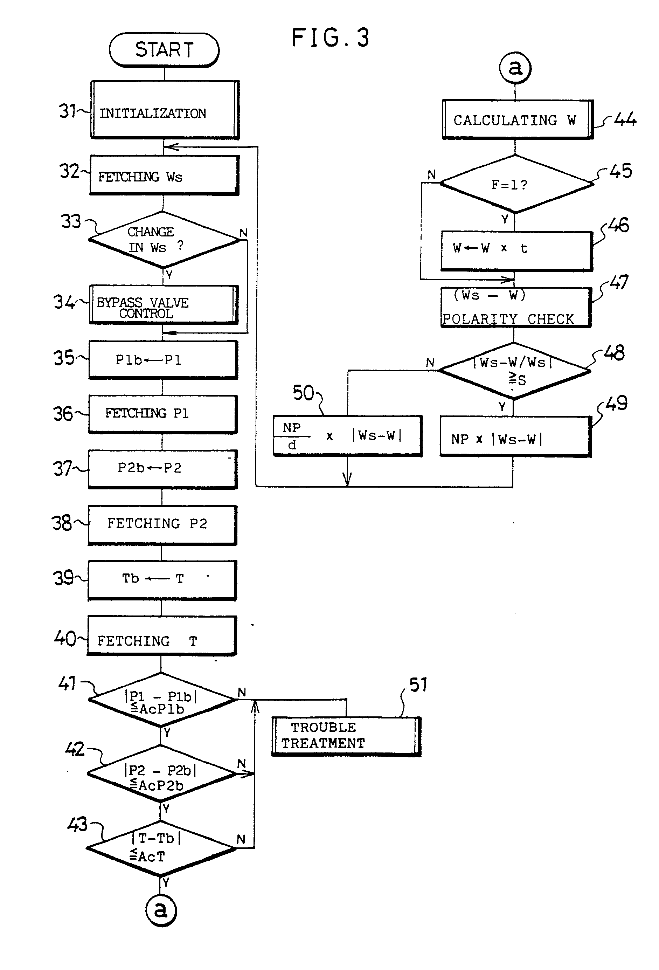

Fig. 3 shows the control procedure to be followed by the CPU 10 for flow rate control. First, initialization is performed (step 31). A flow rate setting Ws is fetch to the CPU 10, which determines an opening degree corresponding to the rate Ws, and the closing member 22 opens the regulating valve 21 to the position of this opening degree. At this time, the valve 21 may be opened approximately to the specified position because when the fluid starts to flow, the flow rate is controlled with high accuracy by the feedback control to be described below.

In step 32, the flow rate setting Ws is fetched and compared with the value stored in the memory 11 to check whether the setting Ws was been changed (step 33). In the event of a change of the setting Ws, bypass valve control follows (step 34).

When the flow rate setting Ws is a large value to pass a large quantity of gas, there arises the need to use the bypass pipe 2. The flow rate setting Ws is compared with a predetermined value (which is stored in the memory 11 although not shown), and when the flow rate Ws is not smaller than the predetermined value, a valve opening instruction SB is given. In response to the instruction SB, the driver 28 opens the bypass valve 27. When the valve opening instruction SB is given, the bypass flag F is set to 1. If the flow rate setting Ws is less than the predetermined value, a valve closing instruction is given to close the bypass valve 27, and the bypass flag F is reset to 0. The bypass valve 27 may be opened or closed in response to some other instruction given from outside, irrespective of the setting Ws.

When the flow rate setting Ws is fetched for the first time after the initialization, the answer to the interrogation of step 33 is always "YES" to effect bypass valve control.

After the above procedure, the preceding measurement P1b in the memory 11 is renewed by being replaced by the current measurement P1 (step 35). The primary pressure P1 is fetched and stored in the memory 11 as the current measurement (step 36). Similarly for the secondary pressure and temperature, the preceding measurements are renewed and the current measurements are fetched (steps 37 to 40).

Next, the difference between the preceding primary pressure P1b and the current value P1 is calculated to check whether there was a marked pressure variation based on the difference (step 41). For one cause or another, there is the likelihood that the primary pressure will abruptly increase twofold or threefold or abruptly drop to one half or one third the preceding value. The abnormal variation factor Ac is so to speak a magnification of variation to provide a standard or reference for judging whether a particular variation is abnormal. For example, it is about 2. If the deviation |P1−P1b| is not larger than the preceding primary pressure P1b multiplied by the factor Ac, the primary pressure variation is regarded as normal, whereas if otherwise, the variation is interpreted as being abnormal. The value P1b · Ac serving as a standard for the judgment is always dependent on the preceding measurement P1b according to the present embodiment, but this value may be a predetermined value.

Similarly the secondary pressure and temperature are checked for abnormal variation (steps 42 and 43).

When the primary and secondary pressure and temperature variations are all within the normal ranges, the flow rate W is calculated from the equations (1) and (2) with use of the current measurements P1, P2 and T and the constants and parameters stored in the memory 11 (step 44). The bypass flag F is checked whether it is 1 (step 45). When the flag is 0, the bypass valve 27 is held closed, with no gas flowing through the bypass pipe 2, so that the calculated flow rate W represents the rate of flow through the regulating valve 21.

When the bypass flag F is 1, the bypass valve 27 is open, permitting the gas to flow also through the bypass pipe 2. Accordingly the calculated flow rate W is multiplied by the bypass correction factor t to calculate the overall rate of flow (through the regulating valve 21). (Step 46). The overall flow rate are expressed by the reference character W insofar as no trouble occurs.

Subsequently the flow rate setting Ws and the flow rate measurement W are checked as to which is larger. In accordance with the result, the driver 24 is given a polarity signal (step 47). When the setting Ws is larger, the polarity is such that the pulse motor 23 is driven in a direction to open the regulating valve 21. If otherwise, the polarity is opposite.

In step 48, the deviation |Ws−W| divided by Ws is checked as to whether the value is larger than the high-low speed change factor S. If the deviation |Ws−W| is large, the regulating valve 21 is subjected to high-speed control, while if it is small, the valve 21 is subjected to low-speed control. The change factor S determines which of the two modes of control, high and low, is to be selected. It is 1 to several %.

For the high-speed control, the reference pulse number Np multiplied by the deviation |Ws−W| is fed from the CPU 10 to the driver 24 as a shift pulse number (step 49). The reference pulse number Np is a shift pulse number to be given to the pulse motor 23 to shift the closing member 22 for the regulating valve 21 by a unit amount. In this way, the pulse motor 23 is driven through an angle of rotation in proportion to the deviation

|Ws−W | to move the closing member 22 for the valve 21 in the opening or closing direction by an amount in proportion to the deviation.

For the low speed control, the driver 24 is given shift pulses which correspond in number to the value obtained by dividing the shift pulse number for the high speed control by the speed reduction constant d (step 50). The constant d is about 2 to about 3.

When step 41 detects an abnormal variation in the primary pressure, step 51 follows for the treatment of trouble. The same treatment follows when step 42 or 43 detects an abnormal variation. This treatment includes assurance of the safety of the system and notifying the operator of the abnormality. The safety of the system is assured, for example, by quickly closing the regulating valve 21. (It is not always needed to fully close the valve). For this purpose, the driver 24 is given a polarity signal representing the valve closing direction and, as a shift pulse number, the reference pulse number Np multiplied by a suitable constant h (larger than 1). To inform the operator of the occurrence of abnormality, a buzzer is turned on or the display gives the information.

The trouble treatment is completed when all the primary and secondary pressures and temperature restore normal values, whereupon the sequence is recycled to step 32. In the first routine following the initialization, steps 41 to 43 are not performed since the preceding values P1b, P2b and Tb are all 0.

## Claims

1. A flow rate control system comprising
a) a flow rate regulating valve (21) mounted on a pipe (1) for passing therethrough the fluid to be controlled,
b) a pressure sensor (3) for detecting the fluid pressure at the primary side and the secondary side of an orifice provided within the pipe (1),
c) a temperature sensor (4) for measuring the fluid temperature in the vicinity of the pressure detecting location,
d) means for calculating the flow rate of the fluid based on the primary and secondary pressure and the temperature detected,
e) means for controlling the degree of opening of the flow rate regulating valve (21) in a direction to decrease the deviation of the calculated flow rate from a flow rate setting in accordance with the deviation and polarity thereof,
characterized by the following features
f) a bypass pipe (2) attached to the main pipe (1) and interconnecting the upstream side and the downstream side of the pressure sensor (3),
g) a bypass valve (27) for opening or closing the flow channel of the bypass pipe (2),
h) means for controlling opening or closing of the bypass valve (27).
i) calculating means for correcting the calculated flow rate according to the ratio of the cross sectional areas of the orifice and the opening of the bypass valve, when it is open.

2. A flow rate control system as defined in claim 1 wherein the means for controlling the opening degree of the flow rate regulating valve includes a motor (23) for moving a closing member (22) for the valve (21) and drive means (24) for the motor (23) and which further comprises a pressure sensor (7) for detecting the contact pressure of the closing member (22) on the valve seat, and means (8, 9) for comparing the contact pressure detected by the pressure sensor (7) with a predetermined reference pressure and giving a signal for forcibly stopping the motor (2) to the motor drive means (24) upon the contact pressure reaching the reference pressure.

3. A flow rate control system as defined in claim 1 or 2 wherein the speed of movement of the valve closing member (22) is variable in accordance with the difference or ratio between the calculated flow rate and the flow rate setting.

4. A flow rate control system as defined in one of the claims 1 to 3 further comprising
a) means (11) for storing the preceding primary or secondary pressure or temperature detected, and
b) means (10) for checking whether the difference or ratio between the current primary or secondary pressure or temperature detected and the preceding corresponding value is in excess of a predetermined value and emitting an abnormality signal when the difference or ratio is in excess.

## Patentansprüche

1. Regelungssystem für eine Strömungsmenge mit
a) einem Regelventil (21) für die Strömungsmenge, das in einem Rohr (1) zum Hindurchführen des zu regelnden Fluids angeordnet ist,
b) einem Drucksensor (3) zur Erfassung des Fluiddruckkes auf der Primär- und der Sekundärseite einer innerhalb des Rohres (1) vorgesehen Meßblende,
c) einem Temperatursensor (4) zum Messen der Fluidtemperatur im Bereich des Druckerfassungssortes,
d) Einrichtungen zur Berechnung der Strömungsmenge des Fluids auf der Grundlage des erfaßten Primär- und Sekundärdruckes und der erfaßten Temperatur,
e) Einrichtungen zur Steuerung des Öffnungsgrades des Regelventils (21) für die Strömungsmenge in einer Richtung, in der die Abweichung der berechneten Strömungsmenge von einer vorgegebenen Strömungsmenge entsprechend der Abweichung und deren Polarität herabgesetzt wird,
gekennzeichnet durch die folgenden Merkmale
f) ein Bypassrohr (2), das an dem Hauptrohr (1) befestigt ist und das die Anström- und die Abströmseite des Drucksensors (3) verbindet,
g) ein Bypassventil (27) zum Öffnen und Schließen des Strömungskanals des Bypassrohrs (2),

h) Einrichtungen zur Öffnungs- oder Schließregelung des Bypassventils (27),

i) Recheinrichtungen zur Korrektur der berechneten Strömungsmenge entsprechend dem Verhältnis der Querschnittsflächen der Meßblende und des Durchflußquerschnitts des Bypassventils, wenn es geöffnet ist.

2. Regelungssystem für eine Strömungsmenge nach Anspruch 1, wobei die Einrichtung zur Steuerung des Öffnungsgrades des Regelventils für die Strömungsmenge einen Motor (23) zur Betätigung eines Schließgliedes (22) für das Ventil (21) und Antriebsmittel (24) für den Motor (23) beinhaltet und welches ferner einen Drucksensor (7) zur Erfassung des Auflagedruckes des Schließglides (22) auf dem Ventilsitz sowie Einrichtungen (8, 9) zum Vergleich des durch den Drucksensor (7) erfaßten Auflagedruckes mit einem vorgegebenen Referenzdruck und zur Aufgabe eines Signals an die Motorantriebsmittel (24) zum zwangzweisen Anhalten des Motors (2), wenn der Anlagedruck den Refenenzdruck erreicht.

3. Regelungssystem für eine Strömungsmenge nach Anspruch 1 oder 2, wobei die Geschwindigkeit der Bewegung des Ventilschließgliedes (22) variabel entsprechend der Differenz oder der Verhältnisses zwischen der berechneten Strömungsmenge und der vorgegebenen Strömungsmenge ist.

4. Steuerungssystem für eine Strömungsmenge nach einem der Ansprüche 1 bis 3 ferner mit

a) Einrichtungen (11) zur Speicherung des vorangegangenen, erfaßten Primär- oder Sekundärdruckes oder der vorangegangenen, erfaßten Temperatur und

b) Einrichtungen (10) zur Prüfung, ob die Differenz oder das Verhältnis zwischen dem augenblicklichen, erfaßten Primär- oder Sekundärdruck oder der augenblicklichen, erfaßten Temperatur einerseits und der vorangegangenen, korrespondierenden Werte andererseits einen vorgegebenen Wert überschreitet, und zum Aussenden eines Unregelmäßigkeitssignals, wenn die Differenz oder das Verhältnis darüber liegt.

**Revendications**

1. Un système de commande de débit comprenant:

a) une vanne de régulation de débit (21) montée sur un tuyau (1) de façon à être traversée par le fluide à commander,

b) un capteur de pression (3) destiné à détecter la pression de fluide du côté primaire et du côté secondaire d'un orifice installé à l'intérieur du tuyau (1),

c) un capteur de température (4) destiné à mesurer la température du fluide au voisinage de l'emplacement de détection de pression,

d) des moyens destinés à calculer le débit du fluide, sur la base des pressions primaire et secondaire et de la température qui sont détectées,

e) des moyens destinés à commander le degré d'ouverture de la vanne de régulation de débit (21) dans un sens qui diminue l'écart entre le débit calculé et une valeur de consigne de débit, conformément à l'écart et à sa polarité,

caractérisé par les caractéristiques suivantes:

f) un tuyau de bipasse (2) fixé au tuyau principal (1) et faisant communiquer le côté amont et le côté aval du capteur de pression (3),

g) une vanne de bipasse (27) destinée à ouvrir ou à fermer le passage d'écoulement du tuyau de bipasse (2),

h) des moyens destinés à commander l'ouverture ou la fermeture de la vanne de bipasse (27), i) des moyens de calcul destinés à corriger le débit calculé, conformément au rapport des aires de section droite de l'orifice et de l'ouverture de la vanne de bipasse, lors-qu'elle est ouverte.

2. Un système de commande de débit selon la revendication 1, dans lequel les moyens destinés à commander le degré d'ouverture de la vanne de régulation de débit comprennent un moteur (23) destiné à déplacer un organe de fermeture (22) pour la vanne (21), et des moyens de commande (24) pour le moteur (23); et le système comprend en outre un capteur de pression (7) destiné à détecter la pressionn de contact de l'organe de fermeture (22) sur la siège de vanne, et des moyens (8, 9) destinés à comparer la pression de contact détectée par le capteur de pression (7) avec une pression de référence prédéterminée, et à appliquer aux moyens de commande de moteur (24) un signal destiné à arrêter de force le moteur (23) lorsque la pression de contact atteint la pression de référence.

3. Un système de commande de débit selon la revendication 1 ou 2, dans lequel la vitesse du mouvement de l'organe de fermeture de vanne (22) est variable en fonction de la différence ou du rapport entre le débit calculé et la valeur de consigne du débit.

4. Un système de commande de débit selon l'une des revendications 1 à 3, comprenant en outre:

a) des moyens (11) destinés à enregistrer les valeurs détectées précédentes de la pression primaire ou secondaire ou de la température, et

b) des moyens (10) destinés à déterminer si la différence ou le rapport entre la valeur détectée courante de la pression primaire ou secondaire ou de la température, et la valeur correspondante précédente, dépasse une valeur prédéterminée, et à émettre un signal d'anomalie lorsque la différence ou le rapport dépasse la valeur prédéterminée.

# FIG.1

0 110 325

# FIG.2

| DATA | | REFERENCE PULSE NUMBER NP | F | $\chi$TABLE | $\gamma_o$,Po |
|---|---|---|---|---|---|
| CURRENT | PRECE-DING | | Fo | | To,<br>K |
| P1 | P1b | ABNORMAL VARIATION FACTOR Ac | $\beta$=Fo/F | | (K TABLE) |
| P2 | P2b | HIGH-LOW SPEED CHANGE FACTOR S | g | | |
| | | SPEED REDUCTION CONSTANT d | | | |
| T | Tb | BYPASS FLAG F | Cv | | |
| Ws SETTING | | BYPASS CORRECTION FACTOR t | Cc | | |

11

# 0 110 325

## FIG.3

```
                                                              ( a )
                                                                │
┌──────────────┐                                        ┌──────────────┐
│INITIALIZATION│ 31                                      │CALCULATING W │ 44
└──────────────┘                                        └──────────────┘
        │                                                       │
┌──────────────┐                                          ◇─────────────◇
│ FETCHING Ws  │ 32                              N        ╱   F=1?        ╲  45
└──────────────┘                              ◄───────────◇─────────────◇
        │                                                       │ Y
    ◇─────────◇                                          ┌──────────────┐
 ╱   CHANGE    ╲  N                                       │  W ← W x t   │ 46
◇   IN Ws ?    ◇───────┐                                  └──────────────┘
    ◇─────────◇        │                                         │
        │ Y            │                                  ┌──────────────┐
┌──────────────┐       │                                  │  (Ws − W)    │ 47
│BYPASS VALVE  │ 34    │                                  │POLARITY CHECK│
│  CONTROL     │       │                                  └──────────────┘
└──────────────┘       │                                         │
        │              │                                   ◇─────────────◇
┌──────────────┐       │                          N       ╱  |Ws−W/Ws|   ╲ 48
│ P1b ← P1     │ 35    │                     ◄────────────◇     ≧S        ◇
└──────────────┘       │                                   ◇─────────────◇
        │              │            50                            │ Y
┌──────────────┐       │      ┌──────────────┐            ┌──────────────┐ 49
│ FETCHING P1  │ 36    │      │ NP           │            │  NP x |Ws−W| │
└──────────────┘       │      │ ── x |Ws−W|  │            └──────────────┘
        │              │      │  d           │                   │
┌──────────────┐       │      └──────────────┘                   │
│ P2b ← P2     │ 37    │             │                           │
└──────────────┘       │             ▼                           │
        │              │
┌──────────────┐       │
│ FETCHING P2  │ 38    │
└──────────────┘       │
        │              │
┌──────────────┐       │
│ Tb ← T       │ 39    │
└──────────────┘       │
        │              │
┌──────────────┐       │
│ FETCHING T   │ 40    │
└──────────────┘       │
        │              │
    ◇─────────◇        │                              51
 ╱  |P1 − P1b| ╲  N    │                        ┌──────────────┐
◇   ≦AcP1b     ◇───────┤                        │   TROUBLE    │
    ◇─────────◇        │                        │  TREATMENT   │
        │ Y            │                        └──────────────┘
    ◇─────────◇        │
 ╱  |P2 − P2b| ╲  N    │
◇   ≦AcP2b     ◇───────┤
    ◇─────────◇        │
        │ Y            │
    ◇─────────◇        │
 ╱   |T−Tb|    ╲  N    │
◇    ≦AcT      ◇───────┘
    ◇─────────◇
        │ Y
      ( a )
```

3